# EUROPEAN PATENT SPECIFICATION

(11) **EP 0 822 223 B1**
(45) Date of publication and mention of the grant of the patent: **03.03.2010**
(21) Application number: 96830432.9
(22) Date of filing: 31.07.1996
(51) Int. Cl.: C08K 7/00, C08L 23/10, C08F 255/02

(54) **A process for preparing reinforced polyolefins and reinforced polyolefin composition**
Verfahren zur Herstellung von verstärkten Polyolefinen und Zusammensetzungen aus verstärkten Polyolefinen
Procédé de préparation de polyoléfines renforcées et compositions contenant des polyoléfines renforcées

(43) Date of publication of application: 04.02.1998
(73) Proprietor: Johnson Control S.P.A., 22050 Lomagna (CO) (IT)
(72) Inventor: Siano, Dante, 20093 Cologno Monzese (MI) (IT); Mascia, Francesco, 22070 Guanzate (CO) (IT); Puppi, Cristiano, 22070 Guanzate (CO) (IT)
(74) Representative: Gislon, Gabriele

(56) References cited:
- US-A- 3 645 939
- US-A- 3 962 157
- PATENT ABSTRACTS OF JAPAN vol. 009, no. 188 (C-295), 3 August 1985 & JP-A-60 058410 (SHOWA DENKO KK), 4 April 1985, & DATABASE WPI Section Ch, Derwent Publications Ltd., London, GB; Class A17, AN 85-118752 & JP-A-60 058 410
- PATENT ABSTRACTS OF JAPAN vol. 017, no. 251 (C-1060), 19 May 1993 & JP-A-05 001184 (TOKUYAMA SODA CO LTD), 8 January 1993, & DATABASE WPI Derwent Publications Ltd., London, GB; AN 93-049702 & JP-A-05 001 184

## Description

The present invention relates to a process for the preparation of compositions comprising polyolefin polymers and semicrystalline copolymers - polypropylene in particular - reinforced with vegetable fibres.

The use of fibre-reinforced polyolefin compositions (and crystalline polypropylene in particular) in the structural parts of vehicle interiors is known to the art. Preferred reinforcing fibres are vegetable in origin, such as wood flour. The use of fibres in general as reinforcer for reinforcing polypropylene resins is preferable to non-fibrous reinforcers such as mineral fillers or glass microspheres because compositions of superior mechanical characteristics can be obtained; in particular, mechanical resistance in terms of ability to withstand tensile, bending and shearing stress can be improved with fibre reinforcing but not with filler.

As already stated, reinforced polyolefin resins are used to make the structural parts of elements (such as internal trim panels for motor vehicles) which furthermore have a visible part which should have a better look than the reinforced resin part. In other words, all the structural and mechanical characteristics of these elements are provided by the structural parts. On the other hand, technical progress has led to the introduction of new processes such as injection moulding which allows complex shapes to be produced, but requires high fluidity characteristics in the materials. The search for high fluidity was further stressed when to complex product shape requirements was added the search weight reduction, leading to a reduction in moulding thickness. This reduction in thickness led in turn to a demand for improved mechanical properties of the polymer materials.

The addition of quantities of fibres up to even 60% of the final product weight causes a considerable change in the rheological characteristics of the composition. More specifically, such a dramatic reduction of the fluidity is obtained that the composition is no more workable. In an attempt to solve these problems, high-fluidity polymer matrices were used in the hope of compensating at least in part for the later reduction in the rheological characteristics.

US-A-4,717,743 and EP-A-0540026 both describe the use of high-fluidity polypropylene bases (MFI>20 at 230°C and 2.16 Kg) as starting matrix, using between 10 and 60% of vegetable fibre (powdered wood and newsprint fibre) and using between 2 to 120% of polyolefins modified so that the polar groups would cause interaction between the matrix and the reinforcing.

Achieving a chemically compatible reinforced composite according to the present art is quite complicated and expensive being necessary to separately produce a high-fluidity polypropylene in the extruder (usually by peroxide degradation) first of all, then (by radical reaction) a polyolefin grafted with polar substances having a double bond, such as maleic ester and anhydride, acrylic acid and ester. The products so produced must then be mixed (always by extrusion) and have the reinforcing fibre added.

This method is expensive and does not always give the desired results since the preparation processes of the various components of the mixture generates heat oxidation and the polyolefins grafted with polar substances do not always improve the properties of the final product.

The aim of the present invention is to solve the aforementioned drawbacks and provide a process to prepare polyolefin, namely polypropylene, polymers having such a fluidity as to enable them to be used in any moulding process while at the same time giving the required structural characteristics.

Such aim is achieved by the process according to claim 1.

In fact, it was surprisingly discovered that it is possible to produce reinforced polyolefins where the polymer matrix is chemically bonded to the reinforcing, by a reactive transformation process. With such a process it is possible to produce materials with the required rheological behaviour and the desired mechanical characteristics.

According to a preferred aspect of the invention, the polypropylene (co)polymers used are mixed with from 10 to 70% by weight of reinforcing fibre, from 0.1 to 3.0% by weight of polar substances and from 0.02 to 1.5% by weight of radical initiators.

According to a another aspect of the invention, the reinforcing fibre used is vegetable fibre, wood fiber in particular.

According to a another aspect of the invention, the polar substances are chosen from fumaric acid, maleic acid, their anhydrides or mixtures thereof.

According to another aspect of the invention, the process may be carried out either in an extruder during production of semi-finished products (granules, plates, draw pieces) or directly in the injection moulding step of the production of the final product.

The process according to the invention has several advantages over the present state of the art. It reduces drastically the production time by completing in one step both the reaction of the starting polypropylene with the radical initiators to produce the required fluidity and its reaction with the polar substances to chemically bind the polymer matrix to the reinforcing fibres.

Another advantage is that the polymer may be prepared by reaction in an extruder or directly in the injection or co-injection moulding process.

Another advantage is that the fluidity of the mixture may be kept constant, increased or reduced depending on the process of transformation and/or production of the semi-finished products.

Another advantage is that the reinforced polymer thus obtained has better mechanical characteristics than similar polymers produced by traditional multi-step technology, which first provides for grafting the compatibilizing substances to a polyolefin, then mixing this polyolefin with the polypropylene which constitutes the base of the final composition, and lastly adding the reinforcing fibres.

As stated above, the process of the invention consists in the mixing at a temperature from 160°C to 310°C of polypropylene polymers with double-bond polar substances and radical initiators and initially heat treating the obtained mixture, then adding vegetable fibers to the mixture and completing the heat treatment thus reinforcing and grafting at the same time. In other words, the compatibilizer polar substances are grafted on the same polyolefin resin which is the polyolefin base of the mixture.

It should be emphasized that the mixture need not necessarily be prepared prior to its use since the invention provides for the mixing occurring even directly in the extruder or in the injection moulding press.

The means for carrying out the process according to the invention may be any known to the art. For example, "Bambury" and "Turbomix" mixers may be used as well as the previously mentioned means.

The treatment period is defined as the actual time for which the mixture is kept at the aforementioned temperature between 160°C and 310°C. The maximum treatment period is that which avoids heat oxidation phenomena of the material.

Propylene polymers are homo and co-polymers of propylene, in particular those with an isotactic index of more than 30%, co-polymers containing one or more alpha-olefins with 2-10 carbon atoms e.g. ethylene, 1-butene, 1-pentene, 4-methyl-1-pentene, 1-hexene, 1-octene; propylene based compositions obtained by polymerization of propylene and/or of mixtures of propylene with ethylene and/or alpha-olefin; syndiotactic propylene, polymers and copolymers of propylene with EPDM and/or fillers such as talc, mica, wollastonite.

The (co)polymers of propylene useful have a melt flow index (MFI) of from 0.1 to 30g/10 min, preferably from 0.1 to 20 at 230°C/2.16 Kg (according to ASTM1238). According to the present invention the content of reinforcing material is incorporated at a content varying from 10 to 70% and preferably from 20 to 60% by weight.

Fibres include mineral fibres such as glass fibre, rock fibre, vegetable fibre such as wood fibre, and synthetic fibres such as carbon fibre, polyester, polyamide.

The preferred fibre is vegetable: wood fibre, rice hull, flax fibre, jute fibre and similar fibres. The size and apparent density of the fibre varies depending on the type used. In particular, the average size of vegetable fibre is from 0.1mm to 4.0mm, preferably from 0.15 mm to 1.2 mm with apparent density from 0.05 to 0.3g/cm³, preferably from 0.1 to 0.25g/cm³.

One example of this type of material is marketed by LASOLE EST S.r.l. (Italy) under the name T35 with the following granular composition:

| | | | | | | | | |
|---|---|---|---|---|---|---|---|---|
| micron | 800 | 500 | 350 | 250 | 180 | 100 | 50 | Base |
| % | 0.00 | 0.10 | 17.80 | 39.30 | 33.30 | 3.10 | 0.80 | 0.30 |
| apparent density =0.189g/cm³; humidity at 120°C = 3%. | | | | | | | | |

The radical initiators are chosen from the peroxides such as dicumyl peroxide (marketed by AKZO Nobel as Perkadox BC-FF and by Peroxid Chemie GmbH as DCUP), 2,5 bis(tertbutylperoxy)-2,5-dimethylhexane (marketed as Trigonox 101 by AKZO Nobel and as DHBP by Peroxid Chemie).

Among non-peroxide radical initiators are 2,3-dimethyl-3,4-diphenylhexane (marketed as Perkadox 58 by AKZO Nobel and as CCDFH by Peroxid Chemie), 2,3-dimethyl-2,3-diphenylbutane (marketed as Perkadox 30 by AKZO Nobel and as CCDFB by Peroxid Chemie).

The radical initiator content according to the present invention may vary over a wide range depending on the effect required, usually it is from 0.02 to 1.5% by weight, preferably from 0.05 to 0.35%. The function of the radical initiators is twofold: to improve the rheological characteristics of the propylene (co)polymer and to graft the polar substances such as maleic anhydride on the propylene (co)polymer matrix.

The polar substances used as compatibilizers between the resin base and the fibre are selected from dicarboxylic acids and anhydrides having a double bond in the molecule, such as maleic acid, fumaric acid and related anhydrides and mixtures thereof. The polar substance-content is within the range of 0.1 to 3.0% and preferably 0.2 to 2.0% by weight of finished product.

In order to avoid thermal oxidation phenomena, stabilizers and anti-oxidants are used during the transformation reaction process. Among the primary anti-oxidants are sterically hindered phenols such as BHT (2,6-di-t-butylparacresol) and secondary amines; among the secondary anti-oxidants are the thioesters such as DLTDP Dilaurylthiodipropionate and DSTDP Disterylthiodipropionate, phosphites and phosphonites.

Ultraviolet light stabilizers may also be added to the mixture, such as sterically hindered amines (HALS), benzophenones and benzotriazols. The stabilizer and anti-oxidant content is usually less than 1.5% and preferably from 0.1 to 1.0% by weight.

Particular care must be exercised in using stabilizers in the presence of radical initiators, since the radical initiator effect itself may be reduced and/or unwanted substances may be produced.

The invention will now be described with reference to the following non-limiting examples:

### Example 1. (Table 1 - formulation 4)

*289 ppw of propylene homopolymer with a Melt Flow Index of 2.4 dg*/*min (measured according to ASTM 1238 at 230°C and 2.16Kg) marketed by PCD Italia (trade name DAPLEN DS 10) are mixed with 1.5 ppw of dicumylperoxide radical initiator marketed by OXIDO (trade name Retic-dcp-s), 206.25 ppw of wood flour marketed by LASOLE (under the name T35), 2.5 ppw of maleic anhydride and 1.0 ppw of BHT stabilizer. The mixture is loaded by known dosing means into an ICMA SANGIORGIO-type contra-rotating twin-screw extruder, having a 140mm diameter and L*/*D ratio of 42.*

*The mixture is extruded at a temperature of from 190°C to 220°C, screw speed of 100 rpm and output of 950 Kg*/*h.*

*The treatment time of the material is less than 2 minutes, the material drawn from the extruder is pelletized by a "head cutter" system, cooled and transported by a closed-circuit containing water. The granules thus produced have a MFI according to ASTM 1238 of 9 at 190°C and 2.16 Kg.*

*The modulus of the material according to DIN 53457 is 3639* *N*/*mm². The product thus produced is dried at 105°C for 3 hours, fed into the hopper of a MIR co-injection 1850 ton press, cylinder diameter 100 mm, L*/*D 19 and melted at a temperature below 200°C and injected into the mould of a vehicle interior panel of large area (1150 X 700 mm), low thickness (average 3.0 mm) and highly complex geometry.*

*The processability and rheological characteristics of the product are very satisfactory.*

### Example 2.

*The same mixture as in Example 1, without prior preparation of the granules, is fed directly into the hopper of a MIR co-injection 1850 ton press as in Example 1, and is used to produce a vehicle interior panel of large area, low thickness and highly complex geometry.*

### Example 3. (Table 2 - formulation 2)

*248 ppw of propylene homopolymer with a MFI = 2.4 dg*/*min (measured according to ASTM 1238), 0.375 ppw of dicumylperoxide, 2.5 ppw of maleic anhydride are fed into the lateral extruder of a Bausano plant sheet extruder.*

*The plant comprises a main contra-rotating twin-screw extruder 154mm in diameter and L*/*D ratio of 32 and a lateral contra-rotating twin-screw extruder 125mm in diameter and L*/*D ratio of 32. The mixture fed into the lateral extruder is plasticized with a heating profile along the extruder cylinder rising from 200°C to 250°C,* *screw speed of 40rpm and output of 450 Kg*/*h.*

*The lateral extruder is coupled to the main extruder half way along the length of the main cylinder, into which are fed 248.08 ppw of wood flour which is marketed as T 1.5 by LASOLE with the following characteristics :*

| | | | | | | | | |
|---|---|---|---|---|---|---|---|---|
| *micron* | *1200* | *1000* | *800* | *600* | *400* | *300* | *200* | *Base* |
| *%* | *13.9* | *21.7* | *21.7* | *22.16* | *7.8* | *7.5* | *2.0* | *0.5* |

*The screw speed is 35 rpm and output is 450 Kg*/*h. The wood flour inside the main extruder is first pre-heated and then brought into contact with the melted polypropylene mixture from the lateral extruder. In the second part of the main extruder, the two flows are mixed intimately at a temperature of between 220°C and 250°C.*

*The material thus mixed is passed through a flat head and then through a set of rollers which produces sheets with thickness of from 1.0 to 4.0mm. The sheets thus produced are used in heat forming processes to produce door interior panels for vehicles.*

### Example 4. (Table 2 - formulation 3)

*248.5 ppw of a propylene copolymer marketed under the name of Moplen EDP 60 R by Montell Polyolefins, with a MFI = 0.6 dg*/*min is treated as in Example 3. The sheets thus produced are used in heat forming processes to produce door interior panels for vehicles.*

In all the above examples the mechanical characteristics of the obtained products are considerably better (average 30%) than those not containing polar substances grafted to the polymer matrix, as shown in Tables 1 and 2 below.

In particular, in Table 1, which reports the formulations used for injection moulding, examples 1 and 2 refer to state of the art compositions, which use a starting polypropylene with high fluidity (MFI = 100). As can be seen, when the wood flour content is 40%, the resin thus filled cannot be injection moulded since the MFI is only 1.4. Table 1 also shows how products produced according to the invention have better mechanical characteristics than the reference products and better than products obtained using formulation 3 where there is no compatibilizer i.e. the polar substance described above.

The improvement in mechanical characteristics is summarized as follows:

For injection moulding compositions (Table 1) with a polypropylene base and wood fiber content of about 60%, the above mentioned values are tensile strength > 30%, bending failure loading > 50%, IZOD > 20%.

For extrusion compositions (Table 2) with a polypropylene base and wood fibre content of from about 45% to 50%, the values are tensile strength > 30N/mm², bending failure loading > 40N/mm², IZOD > 22N/mm².

These values are also about 30% higher than values of reinforced resins obtainable according to the state of the art, and show how compositions according to the present invention are new with respect to the present art, especially because the polar substances i.e the compatibilizers, are linked to the same polyolefin base, directly during the process.

The term EPDM in the tables refers to EP(D)M polymers or to compositions containing such polymers; the fibre length refers to the longest fibre used. The term "phr" refers to parts relative in weight.

**TABLE 1**

| INJECTION MOULDING FORMULATIONS | | | | | | | | |
|---|---|---|---|---|---|---|---|---|
| | | 1 | 2 | 3 | 4 | 5 | 6 | 7 |
| PP Homopolymer MFI=100 230°C 2.16Kg | phr | 70 | 60 | -- | -- | -- | -- | -- |
| PP Homopolymer MFI=2,4 230°C 2.16Kg | phr | -- | -- | 60 | 60 | 60 | 60 | 52 |
| EDPM | | -- | -- | -- | -- | -- | -- | 4,0 |
| Wood flour (350µm) | phr | 30 | 40 | 40 | 40 | 40 | 40 | 44 |
| Radical initiator | phr | -- | -- | 0,3 | 0,3 | 0,3 | 0,1 | 0,254 |
| Compatibilizer (*) | | -- | -- | -- | 0,5(1) | 0,7(2) | 0,5(2) | 0,5(1) |
| MFI= 190°C 2.16Kg | | 10,4 | 1,4 | 7,9 | 9,0 | 9,7 | 2,5 | 8,0 |
| Density | g/cm³ | 1,0 | 1,051 | 1,058 | 1,038 | 1,053 | 1,050 | 1,079 |
| Bending Modulus | N/mm² | 2935 | 3599 | 3631 | 3639 | 3896 | 4177 | 3996 |
| Bending Failure Loading | N/mm² | 41 | 40,6 | 45,7 | 61,5 | 58,6 | 56 | 66,7 |
| Tensile strength | N/mm² | 23,4 | 21,9 | 25 | 36 | 32,5 | 30,4 | 41,7 |
| Izod | J/m | 22,4 | 19 | 17,1 | 27,6 | 20,8 | 22,6 | 43,3 |

| | | | | | | | | |
|---|---|---|---|---|---|---|---|---|
| (*) 1 = Maleic Anhydride 2 = Fumaric Acid | | | | | | | | |

**TABLE 2**

| SHEET (*) FORMULATIONS | | | | | | | | |
|---|---|---|---|---|---|---|---|---|
| | | 1 | 2 | 3 | 4 | 5 | 6 | 7 |
| PP Homopolymer | phr | 50 | 50 | -- | 15 | 45 | 45 | 50 |
| PP Copolymer | phr | 50 | | 50 | 40 | -- | - | -- |
| Wood flour (1200 µm) | phr | -- | 50 | 50 | 35 | 45 | 20 | -- |
| Masonite (1000 µm ) | phr | -- | -- | -- | -- | -- | 25 | -- |
| Wood flour (500 µm) | phr | -- | -- | -- | -- | -- | -- | 50 |
| Talc | phr | -- | -- | -- | 5 | 5 | 5 | -- |
| Compatibilizer | phr | -- | 0,5 | 0,5 | -- | 0,5 | 0,5 | 0,5 |
| Radical initiator | phr | -- | 0,075 | 0,075 | -- | 0,05 | 0,05 | 0,075 |
| EDPM | phr | -- | -- | -- | 5 | 5 | 5 | -- |
| Tensile strength | N/mm² | 25,3 | 45,6 | 36,2 | 23,2 | 37,3 | 38,7 | 45 |
| Bending Modulus | N/mm² | 3658 | 4239 | 3217 | 3197 | 3838 | 4174 | 4248 |
| Bending Failure Loading | N/mm² | 42 | 58,9 | 40,5 | 36,8 | 47,7 | 53,7 | 53,2 |
| Izod | J/m | 15,25 | 24,08 | 34 | 22 | 27,7 | 33 | 22,87 |

| | | | | | | | | |
|---|---|---|---|---|---|---|---|---|
| (*) Characterization of extruded sheets (thickness 1.8 - 2.6mm). | | | | | | | | |

## Claims

1. A process for the preparation of reinforced polyolefins **characterised by** comprising the following steps: mixing polyolefin polymers, compatibilising double-bond polar substances and radical initiators and initially heat treating the obtained mixture at a temperature within the range of 160°C and 310°C, then adding vegetable fibers to the mixture and completing the heat treatment on the mixture containing said vegetable fibers and carrying out at least part of the grafting reaction of said compatibilising polar substances on said polyolefin polymers in the presence of said vegetable fibers..

2. A process according to claim 1, wherein substantially the whole heat treatment is carried out on a mixture containing said reinforcing fibres.

3. A process according to any previous claim, wherein said heat treatment is carried out simultaneously with an extrusion of the said mixture,

4. A process according to any claim 1 to 6, wherein said heat treatment is carried out simultaneously with an injection moulding of the said mixture.

5. A process according to any previous claim, wherein said heat treatment is carried out according to a temperature profile.

6. A process according to any claim 1 to 5, wherein said polyolefin polymers are polypropylene polymers, the quantity of the said reinforcing fibres being within the range of 10% to 70% by weight, the quantity of the said polar substances being within the range of 0.1% to 3% by weight, the quantity of the said radical initiators being within the range of 0.02% to 1.5% by weight.

7. A process according to any claim 1 to 6, wherein the said reinforcing fibres are vegetable fibres originating in materials selected from wood, jute, rice hull, flax or mixtures thereof and having an apparent density of between 0.05 and 0.3 g/cm³ and average length of between 0.1 mm and 4.0 mm.

8. A process according to any previous claim, wherein said compatibilizing polar substances are selected from maleic acid, fumaric acid, maleic anhydride, fumaric anhydride or mixtures thereof.

9. A process according to any previous claim, wherein said polypropylene polymers have an isotactic index greater than 30% and Melt Flow Index (MFI) between 0.1 and 30 g/10 min at 230°C/2.16 Kg.

## Patentansprüche

1. Verfahren zur Herstellung von verstärkten Polyolefinen, **dadurch gekennzeichnet, dass** es folgende Schritte umfasst: Mischen von Polyolefinpolymeren, kompatibilisierenden, polaren Substanzen mit einer Doppelbindung und radikalen Initiatoren und anfängliche Wärmebehandlung der erhaltenen Mischung bei einer Temperatur im Bereich von 160°C und 310°C, anschließendes Hinzufügen pflanzlicher Fasern zu der Mischung und Vollenden der Wärmebehandlung der Mischung enthaltend die pflanzlichen Fasern und mindestens teilweises Ausführen der Aufpolymerisationsreaktion der kompatibilisierenden, polaren Substanzen auf die Polyolefinpolymere in Gegenwart der pflanzlichen Fasern.

2. Verfahren nach Anspruch 1, wobei die Mischung enthaltend Verstärkungsfasern im Wesentlichen der gesamten Wärmebehandlung unterzogen wird.

3. Verfahren nach einem der vorherigen Ansprüche, wobei die Wärmebehandlung gleichzeitig mit einer Extrusion der Mischung durchgeführt wird.

4. Verfahren nach einem der Ansprüche 1 bis 6, wobei die Wärmebehandlung gleichzeitig mit Spritzgießen der Mischung durchgeführt wird.

5. Verfahren nach einem der vorherigen Ansprüche, wobei die Wärmebehandlung nach einem Hitzeprofil durchgeführt wird.

6. Verfahren nach einem der Ansprüche 1 bis 5, wobei die Polyolefinpolymere als Polypropylenpolymere ausgebildet sind, die Menge der Verstärkungsfasern im Bereich von 10 Gew.-% bis 70 Gew.-% liegt, die Menge der polaren Substanzen im Bereich von 0,1 Gew.-% bis 3 Gew.-% liegt, die Menge der radikalen Initiatoren im Bereich von 0,02 Gew.-% bis 1,5 Gew.-% liegt.

7. Verfahren nach einem der Ansprüche 1 bis 6, wobei die Verstärkungsfasern als pflanzliche Fasern stammend aus den Materialien ausgewählt aus Holz, Jute, Reisschalen, Flachs oder Mischungen daraus ausgebildet sind und eine Fülldichte zwischen 0,05 und 0,3 g/cm³ und eine mittlere Menge zwischen 0,1 mm und 4,0 mm aufweisen.

8. Verfahren nach einem der vorherigen Ansprüche, wobei die kompatibilisierenden, polaren Substanzen ausgewählt sind aus Maleinsäure, Fumarsäure, Maleinsäureanhydrid, Fumarsäureanhydrid oder Mischungen daraus.

9. Verfahren nach einem der vorherigen Ansprüche, wobei die Polypropylenpolymere einen isotaktischen Index größer als 30 % und einen Schmelzindex (MFI) zwischen 0,1 und 30 g/10 min bei 230°C/2,16 kg aufweisen.

## Revendications

1. Procédé de préparation de polyoléfines renforcées, **caractérisé en ce qu'**il comprend les étapes suivantes : mélanger les polymères polyoléfiniques, les substances polaires de compatibilisation à doubles liaisons et les initiateurs radicalaires et chauffer initialement le mélange obtenu à une température dans la plage allant de 160 à 310 °C, puis ajouter des fibres végétales au mélange et terminer le chauffage sur le mélange contenant lesdites fibres végétales et mettre en oeuvre au moins partiellement la réaction de greffage desdites substances polaires de compatibilisation sur lesdits polymères polyoléfiniques en présence desdites fibres végétales.

2. Procédé selon la revendication 1, dans lequel essentiellement tout le chauffage est mis en oeuvre sur un mélange contenant lesdites fibres de renforcement.

3. Procédé selon l'une quelconque des revendications précédentes, dans lequel ledit chauffage est mis en oeuvre simultanément à l'extrusion dudit mélange.

4. Procédé selon l'une quelconque des revendications 1 à 6, dans lequel ledit chauffage est mis en oeuvre simultanément au moulage par injection dudit mélange.

5. Procédé selon l'une quelconque des revendications précédentes, dans lequel ledit chauffage est mis en oeuvre en fonction d'un profil de températures.

6. Procédé selon l'une quelconque des revendications 1 à 5, dans lequel lesdits polymères polyoléfiniques sont des polymères de polypropylène, la quantité desdites fibres de renforcement étant dans la plage allant de 10 à 70 % en poids, la quantité desdites substances polaires étant dans la plage allant de 0,1 à 3 % en poids, et la quantité desdits initiateurs radicalaires étant dans la plage allant de 0,02 à 1,5 % en poids.

7. Procédé selon l'une quelconque des revendications 1 à 6, dans lequel lesdites fibres de renforcement sont des fibres végétales provenant de matériaux choisis parmi le bois, le jute, la balle de riz, le lin ou leur mélange et ayant une densité apparente entre 0,05 et 0,3 g/cm³ et une longueur moyenne entre 0,1 et 4,0 mm.

8. Procédé selon l'une quelconque des revendications précédentes, dans lequel lesdites substances polaires de compatibilisation sont choisies parmi l'acide maléique, l'acide fumarique, l'anhydride maléique, l'anhydride fumarique ou leurs mélanges.

9. Procédé selon l'une quelconque des revendications précédentes, dans lequel lesdits polymères de polypropylène ont une indice isotactique supérieur à 30 % et un indice de fluidité à chaud (MFI) entre 0,1 et 30 g/10 min à 230 °C/2,16 kg.
